# EUROPEAN PATENT APPLICATION

(11) **EP 3 278 962 A1**
(43) Date of publication of application: **07.02.2018**
(21) Application number: 16823144.7
(22) Date of filing: 09.06.2016
(51) Int. Cl.: B29C 67/00, B33Y 10/00, B33Y 30/00

(54) **3D ADDITIVE MANUFACTURING SYSTEM, ADDITIVE MANUFACTURING CONTROL DEVICE, ADDITIVE MANUFACTURING CONTROL METHOD, AND ADDITIVE MANUFACTURING CONTROL PROGRAM**

(71) Applicant: Technology Research Association for Future Additive Manufacturing, Tokyo 103-0027 (JP)
(72) Inventor: AMAYA, Koichi, Fukui-shi Fukui 910-8530 (JP); KATOH, Toshihiko, Fukui-shi Fukui 910-8530 (JP); MATSUBARA, Hideto, Fukui-shi Fukui 910-8530 (JP); YOSHIDA, Mitsuyoshi, Fukui-shi Fukui 910-8530 (JP); YAMADA, Takeshi, Fukui-shi Fukui 910-8530 (JP)
(74) Representative: TBK
(86) International application number: PCT/JP2016/067278
(87) International publication number: WO 2017/212619

(57) **Abstract**

This invention provides a laminating and fabricating control apparatus for correcting a laser irradiation position in correspondence with a shift of the laser irradiation position during laminating and fabricating by an optical fabricating unit. The laminating and fabricating control apparatus controls a laminating and fabricating unit that includes a squeezing blade configured to spread a laminating material on an upper layer of a laminated and fabricated object, and an irradiator configured to irradiate the laminating material, to fabricate the laminated and fabricated object. The laminating and fabricating control apparatus includes a position shift acquirer that acquires a shift of an irradiation position of irradiation light on a surface of the squeezing blade when receiving the irradiation light from the irradiator, and an irradiation position corrector that corrects the irradiation position by the irradiator based on the shift of the irradiation position.

## Description

### TECHNICAL FIELD

The present invention relates to a technique of correcting a light irradiation position in three-dimensional laminating and fabricating.

### BACKGROUND ART

In the above technical field, patent literature 1 discloses a technique of, in an optical fabricating apparatus, providing a measurement point on an optical fabricating table, capturing the measurement point and the irradiation position of a laser beam emitted by a laser beam generation apparatus, and controlling a galvano scanner by a scanner controller based on the shift between the laser irradiation position and the measurement point.

### CITATION LIST

### PATENT LITERATURE

Patent literature 1: Japanese Patent Laid-Open No. 2002-103459

### SUMMARY OF THE INVENTION

### TECHNICAL PROBLEM

In the technique described in the above literature, the laser irradiation position can be adjusted before laminating and fabricating by the optical fabricating apparatus. However, the laser irradiation position cannot be corrected in correspondence with, for example, a change, thermal shift, orientation shift, and the like in a mechanical system during laminating and fabricating.

The present invention enables to provide a technique of solving the above-described problem.

### SOLUTION TO PROBLEM

One aspect of the present invention provides a laminating and fabricating control apparatus for controlling a laminating and fabricating unit that includes a squeezing blade configured to spread a laminating material on an upper layer of a laminated and fabricated object, and an irradiator configured to irradiate the laminating material, to fabricate the laminated and fabricated object, comprising:
a position shift acquirer that acquires a shift of an irradiation position of irradiation light on a surface of said squeezing blade when receiving the irradiation light from said irradiator; and
an irradiation position corrector that corrects the irradiation position by said irradiator based on the shift of the irradiation position.

Another aspect of the present invention provides a method of controlling a laminating and fabricating unit that includes a squeezing blade configured to spread a laminating material on an upper layer of a laminated and fabricated object, and an irradiator configured to irradiate the laminating material, to fabricate the laminated and fabricated object, comprising:
acquiring a shift of an irradiation position of irradiation light on a surface of the squeezing blade when receiving the irradiation light from the irradiator; and
correcting the irradiation position by the irradiator based on the shift of the irradiation position.

Still other aspect of the present invention provides a control program for controlling a laminating and fabricating apparatus that includes a squeezing blade configured to spread a laminating material on an upper layer of a laminated and fabricated object, and an irradiator configured to irradiate the laminating material, to fabricate the laminated and fabricated object, which causes a computer to execute a method, comprising:
acquiring a shift of an irradiation position of irradiation light on a surface of the squeezing blade when receiving the irradiation light from the irradiator; and
correcting the irradiation position by the irradiator based on the shift of the irradiation position.

Yet other aspect of the present invention provides a three-dimensional laminating and fabricating system comprising:
a laminating and fabricating unit that includes a squeezing blade configured to spread a laminating material on an upper layer of a laminated and fabricated object, and an irradiator configured to irradiate the laminating material, to fabricate the laminated and fabricated object;
a position shift acquirer that acquires a shift of an irradiation position of irradiation light on a surface of said squeezing blade when receiving the irradiation light from said irradiator; and
an irradiation position corrector that corrects the irradiation position by said irradiator based on the shift of the irradiation position.

### ADVANTAGEOUS EFFECTS OF INVENTION

According to the present invention, it is possible to correct a laser irradiation position in correspondence with a shift of the laser irradiation position during laminating and fabricating by an optical fabricating apparatus.

### BRIEF DESCRIPTION OF THE DRAWINGS

Fig. 1 is a block diagram showing the arrangement of a laminating and fabricating control apparatus according to the first embodiment of the present invention;
Fig. 2 is a conceptual view showing a fabricating state by a laminating and fabricating control apparatus according to the second embodiment of the present invention;
Fig. 3 is a block diagram showing the functional arrangement of a laminating and fabricating unit in a three-dimensional laminating and fabricating system including a laminating and fabricating controller according to the second embodiment of the present invention;
Fig. 4 is a block diagram showing the functional arrangement of the laminating and fabricating controller in the three-dimensional laminating and fabricating system according to the second embodiment of the present invention;
Fig. 5A is a block diagram showing the functional arrangement of a position shift acquirer according to the second embodiment of the present invention;
Fig. 5B is a block diagram showing the functional arrangement of an irradiation position corrector according to the second embodiment of the present invention;
Fig. 6 is a view showing the arrangement of a position shift correction database according to the second embodiment of the present invention;
Fig. 7 is a view showing the arrangement of a position shift data generation table according to the second embodiment of the present invention;
Fig. 8 is a view showing the arrangement of an irradiation position coordinate correction table according to the second embodiment of the present invention;
Fig. 9 is a block diagram showing the hardware arrangement of the laminating and fabricating controller according to the second embodiment of the present invention;
Fig. 10A is a flowchart showing the processing procedure of the laminating and fabricating controller according to the second embodiment of the present invention;
Fig. 10B is a flowchart showing the procedure of position shift data generation processing according to the second embodiment of the present invention;
Fig. 10C is a flowchart showing the procedure of irradiation position correction processing according to the second embodiment of the present invention;
Fig. 11 is a conceptual view showing a fabricating state by a laminating and fabricating control apparatus according to the third embodiment of the present invention;
Fig. 12 is a block diagram showing the functional arrangement of a laminating and fabricating unit in a three-dimensional laminating and fabricating system including a laminating and fabricating controller according to the third embodiment of the present invention;
Fig. 13 is a block diagram showing the functional arrangement of the laminating and fabricating controller in the three-dimensional laminating and fabricating system according to the third embodiment of the present invention;
Fig. 14 is a block diagram showing the functional arrangement of a position shift acquirer according to the third embodiment of the present invention;
Fig. 15 is a view showing the arrangement of a position shift data generation table according to the third embodiment of the present invention;
Fig. 16A is a flowchart showing the procedure of position shift data generation processing according to the third embodiment of the present invention;
Fig. 16B is a flowchart showing the procedure of position shift acquisition processing from a captured image according to the third embodiment of the present invention;
Fig. 17 is a conceptual view showing a fabricating state by a laminating and fabricating control apparatus according to the fourth embodiment of the present invention; and
Fig. 18 is a block diagram showing the functional arrangement of a laminating and fabricating unit in a three-dimensional laminating and fabricating system including a laminating and fabricating controller according to the fourth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

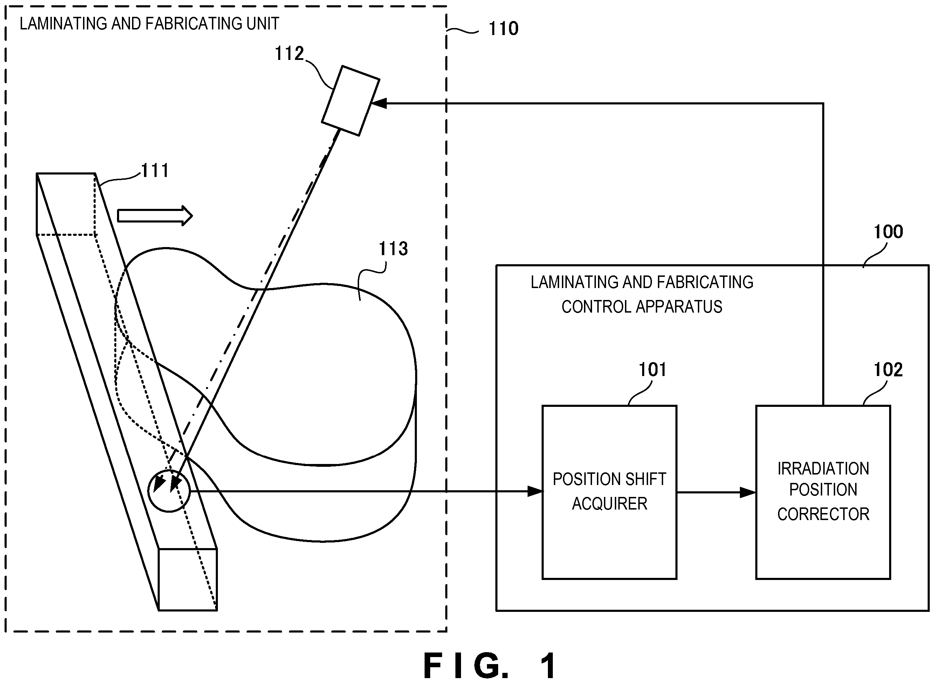

A laminating and fabricating control apparatus 100 according to the first embodiment of the present invention will be described with reference to Fig. 1. The laminating and fabricating control apparatus 100 is an apparatus configured to control a laminating and fabricating unit 110 that includes a squeezing blade 111 configured to spread a laminating material on the upper layer of a laminated and fabricated object 113 and an irradiator 112 configured to irradiate the laminating material, and fabricates the laminated and fabricated object 113.

As shown in Fig. 1, the laminating and fabricating control apparatus 100 includes a position shift acquirer 101 and an irradiation position corrector 102. The position shift acquirer 101 acquires a position shift of the irradiation position of irradiation light on a surface of the squeezing blade 111 that receives light from the irradiator 112. The irradiation position corrector 102 corrects the irradiation position by the irradiator 112 based on the position shift.

According to this embodiment, the position shift of the irradiation position of the irradiation light on the surface of the squeezing blade is acquired, and the irradiation position by the irradiator is corrected, thereby correcting the laser irradiation position in correspondence with the shift of the laser irradiation position during laminating and fabricating by an optical fabricating apparatus.

### [Second Embodiment]

Laminating and fabricating by a laminating and fabricating control apparatus according to the second embodiment of the present invention will be described next. The laminating and fabricating control apparatus according to this embodiment acquires the position shift of light irradiation based on reception of irradiation light by a light position sensor placed on the upper surface of a squeezing blade, and corrects the position shift by correcting irradiation position coordinates.

### <<Concept of Fabricating of Laminating and Fabricating Control Apparatus>>

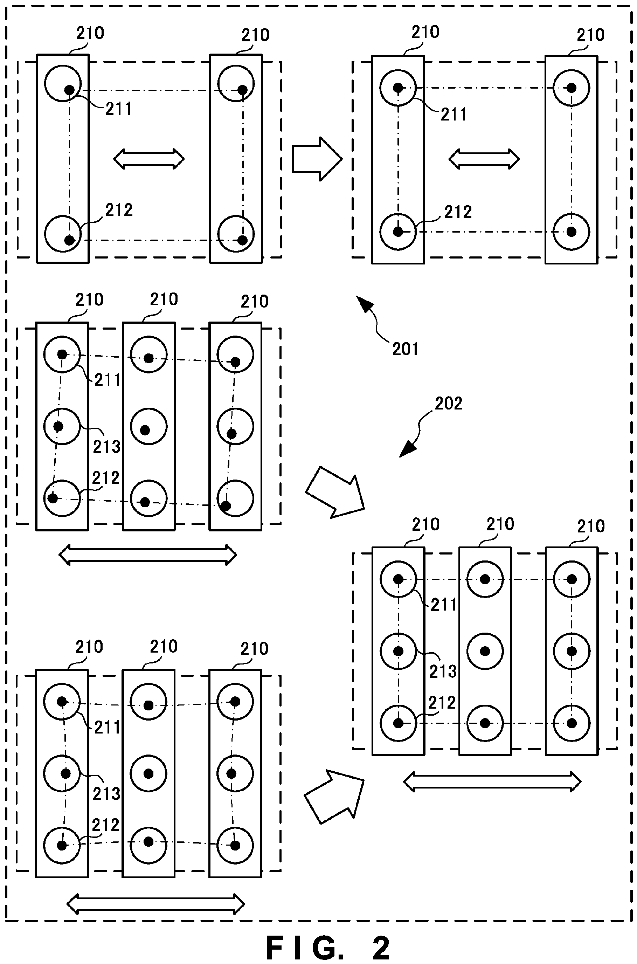

Fig. 2 is a conceptual view showing a fabricating state by the laminating and fabricating control apparatus according to this embodiment. In Fig. 2, light position sensors are illustrated large without considering the dimensional relationship of constituent elements to clearly show the fabricating state according to this embodiment. Note that Fig. 2 illustrates position shift detection at four points at minimum and position shift detection at nine points. However, the number of detection points can appropriately be selected in consideration of the correction accuracy, cost, and the like.

The upper row of Fig. 2 shows an example 201 in which the position shifts of irradiation at the points of the four corners of a laminated and fabricated surface are detected by two light position sensors 211 and 212 placed at the two ends of a squeezing blade 210, and irradiation position correction is performed. The left view of the upper row shows a case in which a position shift to the lower right occurs as a whole. According to this embodiment, irradiation position coordinates are corrected using an irradiation position correction map based on the position shift data of the four points from the two light position sensors 211 and 212, and the position shifts are corrected as shown in the right view of the upper row.

The middle and lower rows of Fig. 2 show an example 202 in which the position shifts of irradiation at nine points of the laminated and fabricated surface are detected by three light position sensors 211 to 213 placed at the two ends and the central portion of the squeezing blade 210, and irradiation position correction is performed. The left view of the middle row shows a case in which the positions shift such that a clockwise rotation about the upper left corner occurs as a whole. The left view of the lower row shows a case in which the positions shift such that the central portion of each side contracts. According to this embodiment, irradiation position coordinates are corrected using an irradiation position correction map based on the position shift data of the nine points from the three light position sensors 211 to 213, and the position shifts are corrected as shown in the right view between the middle and left rows.

Note that the number of light position sensors arranged on the squeezing blade 210 and the number of positions to detect position shifts by irradiating the squeezing blade 210 are not limited to these examples, and are selected in consideration of the correction accuracy and cost.

### «Functional Arrangement of Laminating and Fabricating Unit»

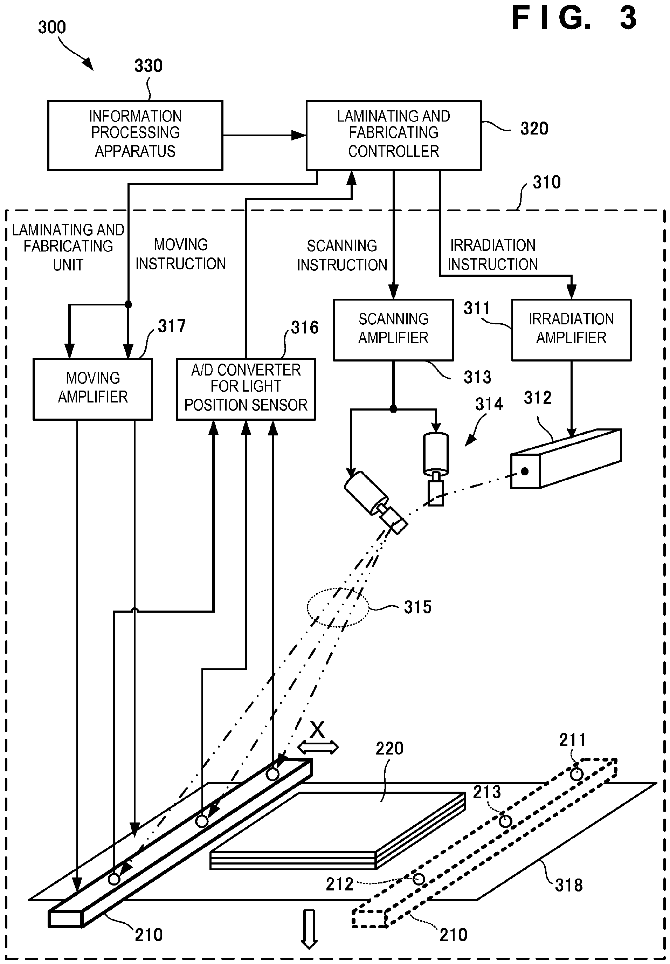

Fig. 3 is a block diagram showing a functional arrangement of a laminating and fabricating unit 310 in a three-dimensional laminating and fabricating system 300 including a laminating and fabricating controller 320 according to this embodiment.

The three-dimensional laminating and fabricating system 300 includes the laminating and fabricating unit 310, the laminating and fabricating controller 320 serving as the laminating and fabricating control apparatus, and an information processing apparatus 330. The laminating and fabricating unit 310 generates a three-dimensional laminated and fabricated object in accordance with various kinds of control instructions from the laminating and fabricating controller 320. The laminating and fabricating controller 320 generates various kinds of control instructions used to control the laminating and fabricating unit 310 in accordance with three-dimensional fabricating data generated by the information processing apparatus 330. The control instructions include an irradiation instruction used to control an irradiator 312 by an irradiation amplifier 311, a scanning instruction used to control a scanning direction by a scanning amplifier 313 via a mirror unit 314 rotated by a rotary step motor, and a moving instruction used to control the movement of the squeezing blade 210 or a fabricating table 318. The information processing apparatus 330 acquires the information of a laminated and fabricated object as a three-dimensional fabricating target and generates three-dimensional fabricating data. Note that the information processing apparatus 330 may be a general-purpose computer or a special computer corresponding to this embodiment.

The laminating and fabricating unit 310 includes the irradiation amplifier 311 and the irradiator 312. The laminating and fabricating unit 310 also includes the scanning amplifier 313 and the biaxial rotary step motor and mirror unit 314. The laminating and fabricating unit 310 also includes a moving amplifier 317, the squeezing blade 210, and the fabricating table 318. The light position sensors (PSD: Position Sensitive Detectors) 211 to 213 are placed on the upper surface of the squeezing blade 210. The laminating and fabricating unit 310 includes an A/D converter (Analogue Digital Convertor) 316 for light position sensor that converts analog light position signals from the light position sensors 211 to 213 into digital signals and transmits them to the laminating and fabricating controller 320.

A laser beam 315 radiated from the irradiator 312 irradiates, via the mirror unit 314 rotated by the rotary step motor, the upper surface of a fabricated object 220 already laminated and fabricated on the fabricating table 318 to generate a fabricated surface. After one layer is fabricated, the fabricating table 318 is moved down by a predetermined width (= layer thickness), and the laminating material of the next layer is spread by the squeezing blade 210 on the upper layer of the laminated and fabricated object. This operation is repeated in accordance with three-dimensional fabricating data, thereby generating a three-dimensional laminated and fabricated object.

In this embodiment, the position shift of an irradiation position of the laser beam 315 radiated from the irradiator 312 can be corrected not only before laminating and fabricating but also during laminating and fabricating. That is, when the squeezing blade 210 moves on the fabricated surface, the laser beam 315 radiated from the irradiator 312 irradiates x- and y-coordinate positions corresponding to the X-direction coordinate position of the squeezing blade 210 and the Y-direction coordinate positions of the light position sensors 211 to 213. At this time, the laminating and fabricating controller 320 reduces the irradiation intensity (energy), and then sets the x- and y-coordinate positions. The light position sensors 211 to 213 detect positions actually irradiated with the laser beam 315 that irradiates the x- and y-coordinate positions. Analog light position signals from the light position sensors 211 to 213 are converted into analog data by the A/D converter 316 for light position sensor, transmitted to the laminating and fabricating controller 320, and used to correct the irradiation position coordinates.

### «Functional Arrangement of Laminating and Fabricating Controller»

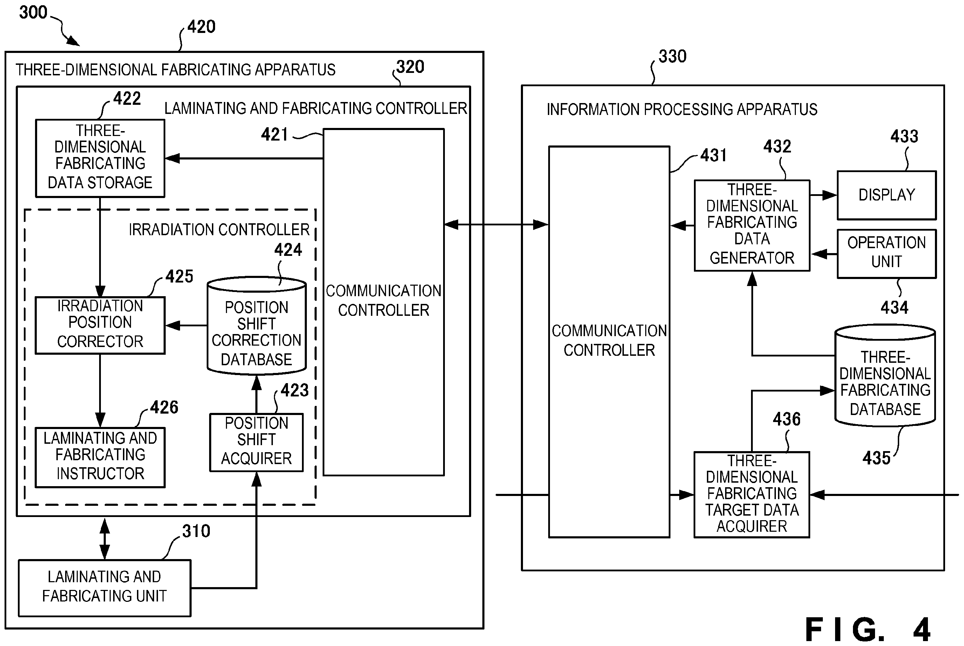

Fig. 4 is a block diagram showing the functional arrangement of the laminating and fabricating controller 320 in the three-dimensional laminating and fabricating system 300 according to this embodiment. Fig. 4 shows the functional arrangements of the laminating and fabricating controller 320 and the information processing apparatus 330 shown in Fig. 3. The laminating and fabricating unit 310 and the laminating and fabricating controller 320 may form a three-dimensional fabricating apparatus 420, that is, a so-called 3D printer. The arrangement of the laminating and fabricating unit 310 is the same as in Fig. 3, and a repetitive description will be omitted. Note that Fig. 4 illustrates the information processing apparatus 330 and the three-dimensional fabricating apparatus 420 including the laminating and fabricating controller 320 as separate apparatuses. However, they may be formed as one apparatus, or the laminating and fabricating controller 320 may be combined with the information processing apparatus 330.

The laminating and fabricating controller 320 includes a communication controller 421, a three-dimensional fabricating data storage 422, a position shift acquirer 423, a position shift correction database 424, an irradiation position corrector 425, and a laminating and fabricating instructor 426.

The communication controller 421 controls communication between the laminating and fabricating controller 320 and the information processing apparatus 330 and receives three-dimensional fabricating data, an instruction command, or the like from the information processing apparatus 330, or transmits the status of the laminating and fabricating controller 320 or the laminating and fabricating unit 310 to the information processing apparatus 330. The three-dimensional fabricating data storage 422 stores three-dimensional fabricating data received from the information processing apparatus 330. Note that the three-dimensional fabricating data can be stored on the basis of a three-dimensional fabricated object or a layer to be laminated, and is appropriately decided based on the laminating and fabricating speed of the three-dimensional fabricating apparatus 420, the processing speed of the information processing apparatus 330, the communication capacity between the information processing apparatus 330 and the laminating and fabricating controller 320, and the like.

The position shift acquirer 423 acquires position shift data of light detected by the light position sensors 211 to 213 at predetermined x- and y-coordinates from the A/D converter 316 for light position sensor in the laminating and fabricating unit 310. Note that as for the predetermined x- and y-coordinates, in this example, two or three points can be set in the Y direction, and a desired number of points can be set in the X direction. An example in which four points or nine points are set will representatively be described. However, the number of points is not limited in both the X and Y directions.

The position shift correction database 424 stores position shift correction data based on the set of position shift data of light acquired by the position shift acquirer 423. For the three-dimensional fabricating data currently under laminating and fabricating, the irradiation position corrector 425 corrects the irradiation position coordinates in correspondence with the position shifts, and absorbs a change, thermal shift, orientation shift, and the like in a mechanical system during the laminating and fabricating in this embodiment. The laminating and fabricating instructor 426 outputs an instruction to each unit of the laminating and fabricating unit 310 based on the three-dimensional fabricating data that has undergone the irradiation position coordinate correction by the irradiation position corrector 425. The position shift acquirer 423, the position shift correction database 424, the irradiation position corrector 425, and the laminating and fabricating instructor 426 form an entire irradiation controller or a part thereof.

The information processing apparatus 330 can be a general-purpose computer such as a PC (Personal Computer). The information processing apparatus 330 includes a communication controller 431, a three-dimensional fabricating data generator 432, a display 433, an operation unit 434, a three-dimensional fabricating database 435, and a three-dimensional fabricating target data acquirer 436. Note that if the information processing apparatus 330 includes a three-dimensional fabricating target data generation function, the three-dimensional fabricating target data acquirer 436 serves as a three-dimensional fabricating target data generator.

The communication controller 431 controls communication with the three-dimensional fabricating apparatus 420 or a three-dimensional fabricating target data generation apparatus that is an external apparatus. The three-dimensional fabricating data generator 432 generates three-dimensional fabricating data used by the three-dimensional fabricating apparatus 420 to laminate and fabricate a three-dimensional fabricated object using data stored in the three-dimensional fabricating database 435 in accordance with an input or operation of the operator from the operation unit 434 according to an operation instruction displayed on the display 433. The display 433 notifies the status of the three-dimensional fabricating apparatus 420 or the information processing apparatus 330, and requests the operator to input a parameter necessary for laminating and fabricating of a three-dimensional fabricated object. The operation unit 434 includes a keyboard, a pointing device, a touch panel, and the like, and accepts an input or operation instruction from the operator in accordance with an instruction displayed on the display 433. The three-dimensional fabricating database 435 stores the data, generation algorithm, generation parameter, and the like of the three-dimensional fabricated object that are data used by the three-dimensional fabricating data generator 432 to generate three-dimensional fabricating data. The three-dimensional fabricating target data acquirer 436 acquires the three-dimensional fabricating data provided by the three-dimensional fabricating target data generation apparatus via the communication controller 431 or from a storage medium or the like via an I/O interface.

### (Position Shift Acquirer)

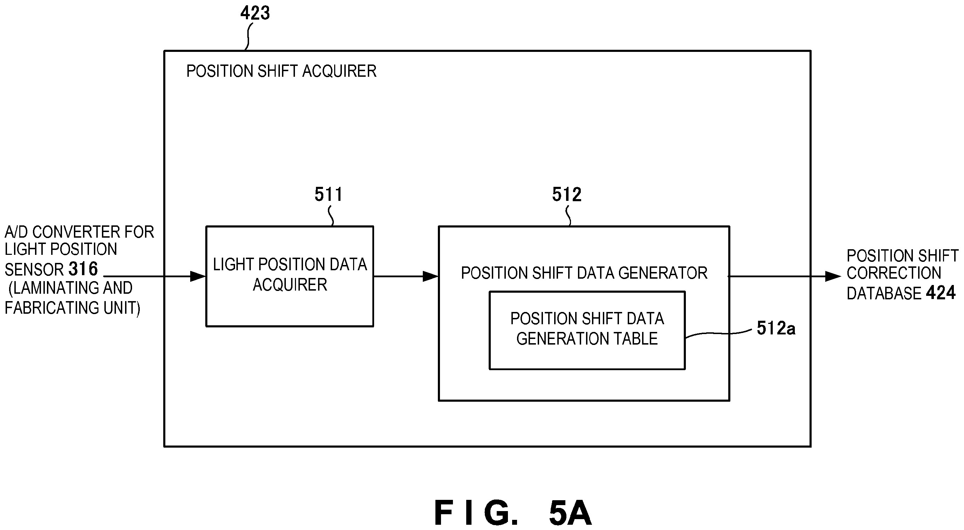

Fig. 5A is a block diagram showing the functional arrangement of the position shift acquirer 423 according to this embodiment.

The position shift acquirer 423 includes a light position data acquirer 511 and a position shift data generator 512. The light position data acquirer 511 acquires, from the A/D converter 316 for light position sensor in the laminating and fabricating unit 310, the digital data of light position signals detected by the light position sensors 211 to 213 at predetermined positions (x-coordinates) of the squeezing blade 210. The position shift data generator 512 includes a position shift data generation table 512a, and generates a set of shift data of light position data at predetermined coordinates of the fabricated surface acquired by the light position data acquirer 511. The generated set of the shift data of the light position data is output to the position shift correction database 424 and used to search for the irradiation position correction map used by the irradiation position corrector 425.

### (Irradiation Position Corrector)

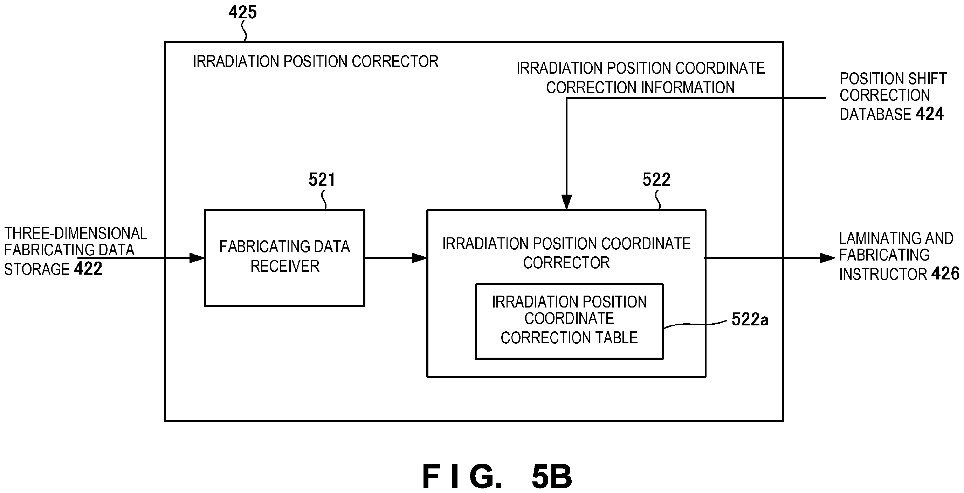

Fig. 5B is a block diagram showing the functional arrangement of the irradiation position corrector 425 according to this embodiment.

The irradiation position corrector 425 includes a fabricating data receiver 521 and an irradiation position coordinate corrector 522. The fabricating data receiver 521 receives fabricating data of each layer from the three-dimensional fabricating data storage 422. The irradiation position coordinate corrector 522 includes an irradiation position coordinate correction table 522a, and corrects the irradiation position coordinates of the fabricating data received by the fabricating data receiver 521 based on an irradiation position correction map stored in the position shift correction database 424 and searched by position shift data from the position shift acquirer 423. The irradiation position coordinate corrector 522 outputs the fabricating data that has undergone irradiation position coordinate correction based on position shifts to the laminating and fabricating instructor 426. The laminating and fabricating instructor 426 outputs a scanning instruction to the laminating and fabricating unit 310 based on the corrected irradiation position coordinates.

### (Position Shift Correction Database)

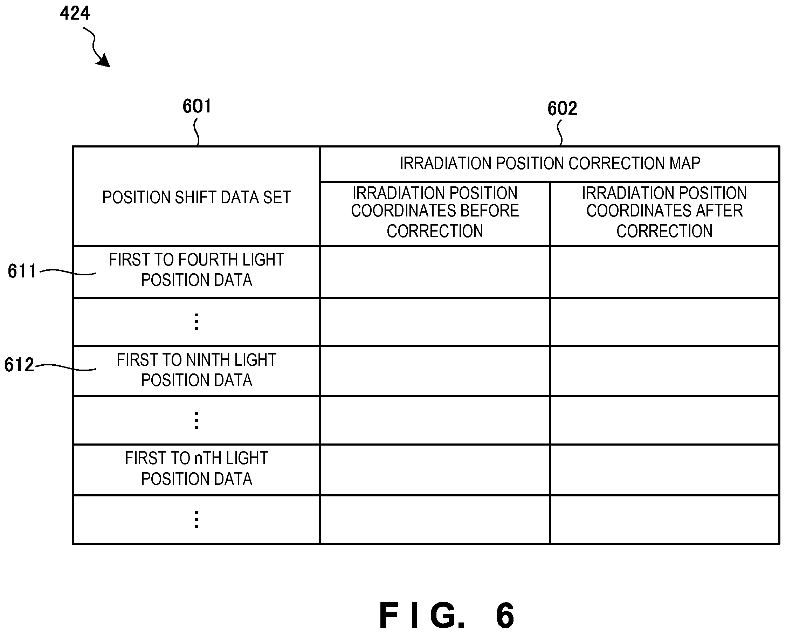

Fig. 6 is a view showing the arrangement of the position shift correction database 424 according to this embodiment. The position shift correction database 424 stores irradiation position correction maps each searched using a position shift data set generated by the position shift acquirer 423 as a search key, and is used by the irradiation position corrector 425 to correct a position shift. Note that the position shift correction database 424 is not limited to the arrangement shown in Fig. 6.

The position shift correction database 424 stores an irradiation position correction map 602 in correspondence with a position shift data set 601 serving as a search key. As the position shift data set 601, the position shift correction database 424 stores a table 611 of the set of first light position data to fourth light position data at the four points shown in Fig. 2, a table 612 of the set of first light position data to ninth light position data at the nine points, and the like. The number of light position data is not limited. The number of light position data depends on the number of light position sensors placed on the squeezing blade 210 or the number of detection positions of light position data at the time of position shift acquisition. The irradiation position correction map 602 stores irradiation position coordinates after correction in correspondence with the irradiation position coordinates in fabricating data before correction.

### (Position Shift Data Generation Table)

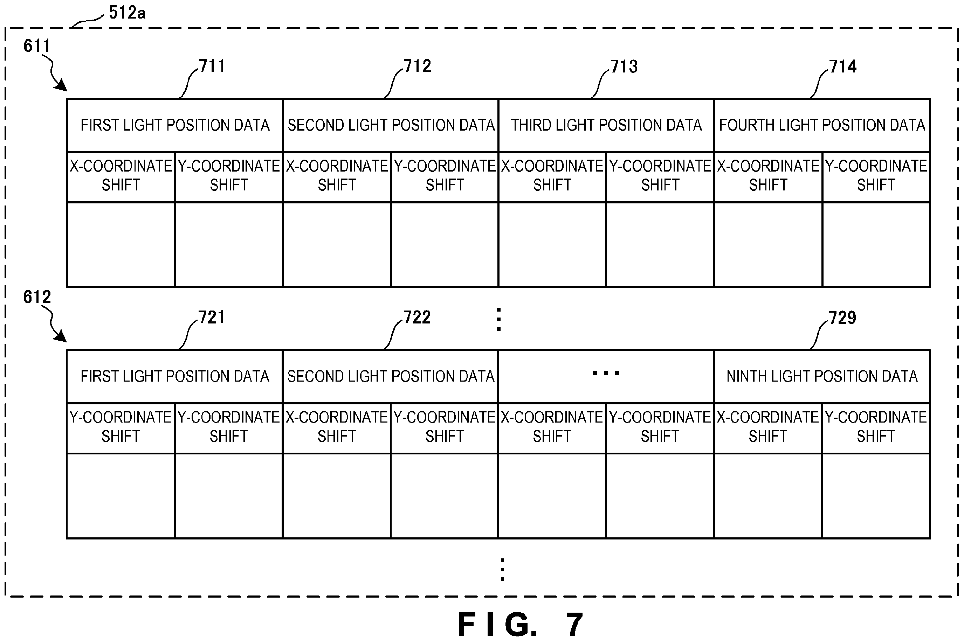

Fig. 7 is a view showing the arrangement of the position shift data generation table 512a according to this embodiment. The position shift data generation table 512a is used by the position shift acquirer 423 to generate a set of position shift data from the light position sensors 211 to 213 placed on the squeezing blade 210 as a search key used to search for the irradiation position correction map 602 stored in the position shift correction database 424. Note that the same reference numerals as in Fig. 6 denote the same elements in Fig. 7. Position shifts at four points and position shifts at nine points will be described with reference to Fig. 7. However, the present invention is not limited to this.

As for the table 611 of the four points in the position shift data generation table 512a, a set of first light position data 711 to fourth light position data 714 each including an x-coordinate shift and a y-coordinate shift is generated and output to the position shift correction database 424 as a search key. As for the table 612 of the nine points in the position shift data generation table 512a, a set of first light position data 721 to the ninth light position data 729 each including an x-coordinate shift and a y-coordinate shift is generated and output to the position shift correction database 424 as a search key.

### (Irradiation Position Coordinate Correction Table)

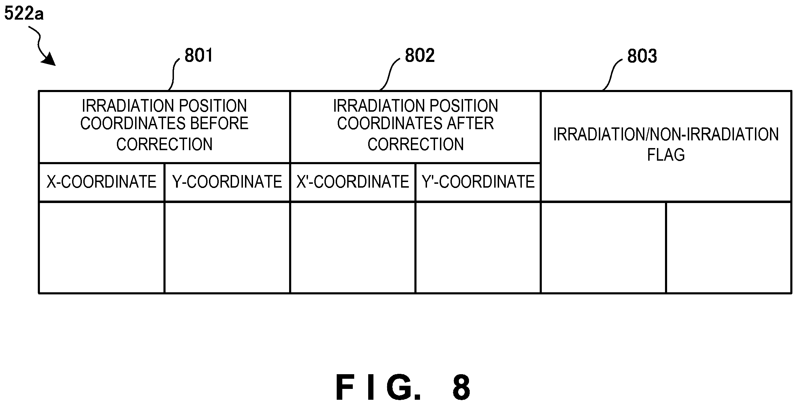

Fig. 8 is a view showing the arrangement of the irradiation position coordinate correction table 522a according to this embodiment. The irradiation position coordinate correction table 522a is used by the irradiation position corrector 425 to correct the irradiation position coordinates of fabricating data to irradiation position coordinates after position shift correction.

The irradiation position coordinate correction table 522a includes irradiation position coordinates 801 before correction including an x-coordinate and a y-coordinate, irradiation position coordinates 802 after correction serving as correction data based on the irradiation position correction map 602 searched by using a set of position shift data as a search key, and a flag 803 representing whether to irradiate the irradiation position. Note that if only a region to be fabricated is stored, the flag representing whether to perform fabricating is unnecessary.

### «Hardware Arrangement of Laminating and Fabricating Controller»

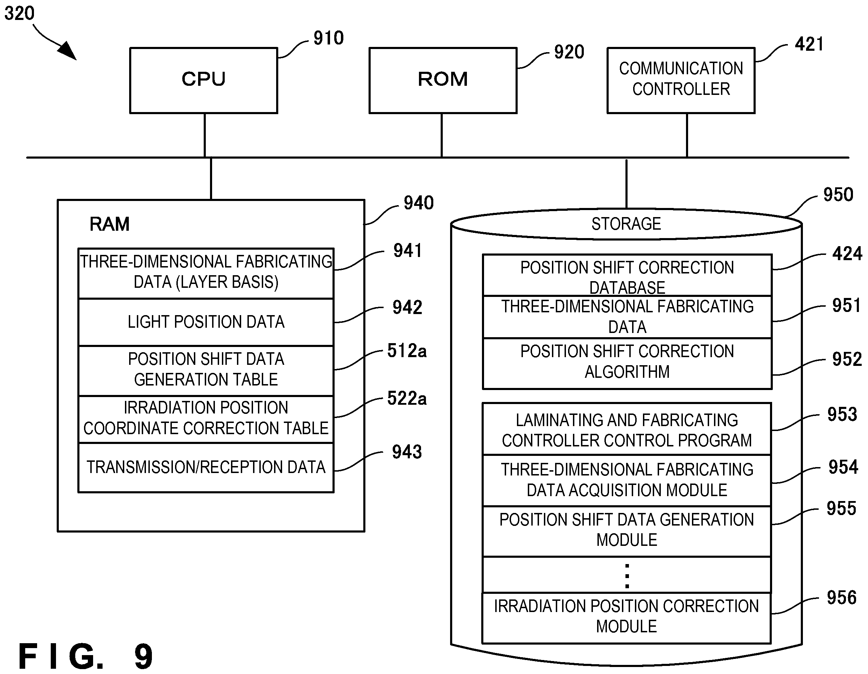

Fig. 9 is a block diagram showing the hardware arrangement of the laminating and fabricating controller 320 according to this embodiment.

In Fig. 9, a CPU (Central Processing Unit) 910 is a processor for arithmetic control and implements the functional components of the laminating and fabricating controller 320 shown in Fig. 4 by executing a program. A ROM (Read Only Memory) 920 stores initial data and permanent data such as a program. The communication controller 421 communicates with the information processing apparatus 330 via a network or the like. Note that the number of CPUs 910 is not limited to one, and the CPU 910 may include a plurality of CPUs or a GPU (Graphics Processing Unit) for image processing. In particular, a processor configured to acquire position shift data, a processor configured to correct an irradiation position, and a processor configured to generate various kinds of instructions to control the laminating and fabricating unit 310 based on received three-dimensional fabricating data are preferably separate processors. The communication controller 421 also preferably includes a CPU independent of the CPU 910 and writes or reads transmission/reception data in or from an area of a RAM (Random Access Memory) 940.

The RAM 940 is a random access memory used by the CPU 910 as a work area for temporary storage. An area to store data necessary for implementation of the embodiment is allocated to the RAM 940. Three-dimensional fabricating data 941 is the data of a three-dimensional fabricated object that is currently laminated and fabricated. Light position data 942 is data acquired from the light position sensors 211 to 213. The position shift data generation table 512a is a table described with reference to Fig. 7 which is used by the position shift acquirer 423 to generate a position shift data set. The irradiation position coordinate correction table 522a is a table described with reference to Fig. 8 which is used by the irradiation position corrector 425 to correct irradiation position coordinates in correspondence with position shifts. Transmission/reception data 943 is data transmitted/received via the communication controller 421.

A storage 950 stores databases, various kinds of parameters, and following data and programs necessary for implementation of the embodiment. The position shift correction database 424 is a database described with reference to Fig. 6 which stores an irradiation position correction map searched using a position shift data set as a search key. Three-dimensional fabricating data 951 is data for laminating and fabricating of a three-dimensional fabricated object, which is received from the information processing apparatus 330 via the communication controller 421 and stored. A position shift correction algorithm 952 is an algorithm used to correct irradiation position coordinates based on a position shift data set.

The storage 950 stores the following programs. A laminating and fabricating controller control program 953 is a control program that controls the entire laminating and fabricating controller 320. A three-dimensional fabricating data acquisition module 954 is a module that communicates with the information processing apparatus 330 and acquires three-dimensional fabricating data. A position shift data generation module 955 is a module that generates a search key based on position shift data acquired from the light position sensors 211 to 213. An irradiation position correction module 956 is a module that corrects irradiation position coordinates based on a found irradiation position correction map.

Note that programs and data associated with general-purpose functions and other implementable functions of the laminating and fabricating controller 320 are not shown in the RAM 940 or the storage 950 of Fig. 9.

### «Processing Procedure of Laminating and Fabricating Controller»

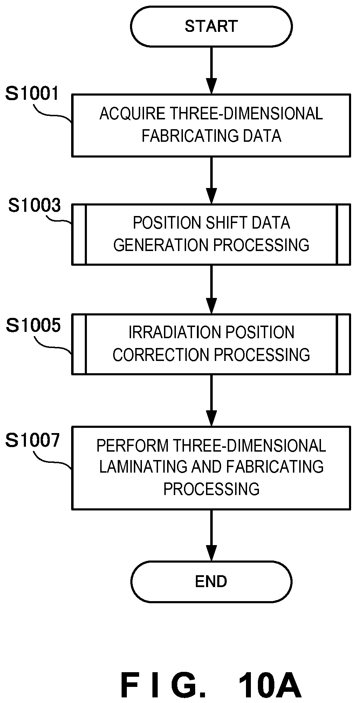

Fig. 10A is a flowchart showing the processing procedure of the laminating and fabricating controller 320 according to this embodiment. This flowchart is executed by the CPU 910 shown in Fig. 9 using the RAM 940 and implements the functional components of the laminating and fabricating controller 320 shown in Fig. 4.

In step S1001, the laminating and fabricating controller 320 receives three-dimensional fabricating data from the information processing apparatus 330 and stores it. In step S1003, the laminating and fabricating controller 320 acquires position shifts from the light position sensors placed on the squeezing blade 210, and executes position shift data generation processing. In step S1005, the laminating and fabricating controller 320 executes irradiation position correction processing of compensating for the position shifts using an irradiation position correction map searched using the position shift data set as a search key. In step S1007, the laminating and fabricating controller 320 executes three-dimensional laminating and fabricating in the laminating and fabricating unit 310 using the corrected irradiation position coordinates.

### (Position Shift Data Generation Processing)

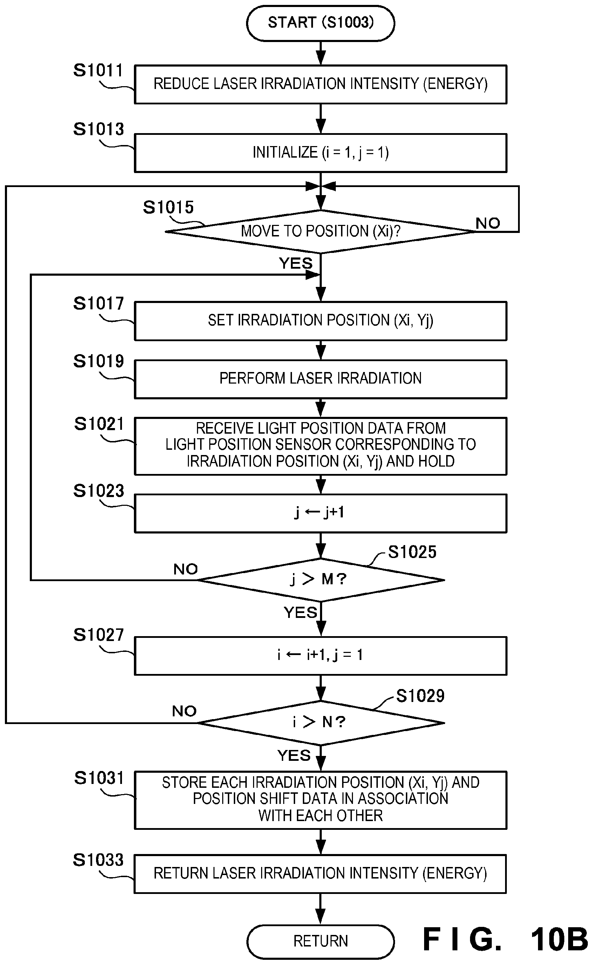

Fig. 10B is a flowchart showing the procedure of position shift data generation processing (step S1003) according to this embodiment.

In step S1011, the switcher of the laminating and fabricating controller 320 reduces the laser irradiation intensity (energy) to an intensity (energy) capable of irradiating the upper surface of the squeezing blade 210. In step S1013, the laminating and fabricating controller 320 performs initialization (i = 1, j = 1). Note that i is the number of times of position shift detection in the moving direction (X direction) of the squeezing blade 210, and j is the number of times of position shift detection (= the number of light position sensors) in the axial direction (Y direction) of the squeezing blade 210. M is the number of light position sensors on the squeezing blade 210, N is the maximum number of times of position shift detection, and i ≥ N holds.

In step S1015, the laminating and fabricating controller 320 waits for the squeezing blade 210 to move to a position (Xi) to detect irradiation position shifts. When the squeezing blade 210 moves to the position (Xi) to detect irradiation position shifts, the laminating and fabricating controller 320 sets an irradiation position (Xi, Yj) to perform laser irradiation in step S1017, and instructs to do laser irradiation in step S1019. In step S1021, the laminating and fabricating controller 320 receives light position data from the light position sensor corresponding to the irradiation position (Xi, Yj), and holds the data as position shift data.

In step S1023, the laminating and fabricating controller 320 increments j by one to set j + 1. In step S1025, the laminating and fabricating controller 320 determines whether j > M holds. Note that if three light position sensors are placed on the squeezing blade 210, M = 3. If j > M does not hold, the laminating and fabricating controller 320 returns to step S1017 to irradiate the next light position sensor on the squeezing blade 210 and detect a position shift. Note that in this embodiment, a shift occurs due to the movement of the squeezing blade 210 or the irradiation position setting of the irradiator. Hence, if there is an influence on the fabricating accuracy, the irradiation position setting of the irradiator is preferably adjusted.

If j > M holds, in step S1027, the laminating and fabricating controller 320 sets j = 1, and increments i by one to set i + 1. The squeezing blade 210 is moved to the next position (i). Note that in step S1029, the laminating and fabricating controller 320 determines whether i > N holds. Note that if three light position sensors are placed on the squeezing blade 210, and position shifts are detected at nine points, N = 3. If i > N does not hold, the laminating and fabricating controller 320 returns to step S1015 to irradiate the next light position sensor at the next position (i = i + 1) on the squeezing blade 210 and detect a position shift.

If i > N holds, the laminating and fabricating controller 320 stores each irradiation position (Xi, Yj) and the position shift data in association with each other in step S1031. The switcher of the laminating and fabricating controller 320 returns the laser irradiation intensity (energy) to the normal state, and ends the position shift data generation processing.

### (Irradiation Position Correction Processing)

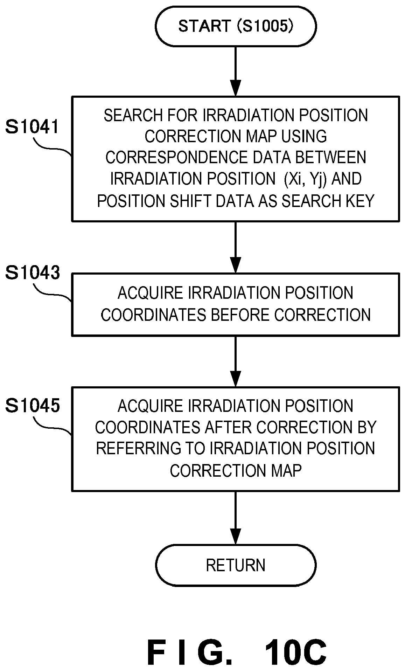

Fig. 10C is a flowchart showing the procedure of irradiation position correction processing (step S1005) according to this embodiment.

In step S1041, the laminating and fabricating controller 320 searches for an irradiation position correction map stored in the position shift correction database 424 using correspondence data between the irradiation position (Xi, Yj) and position shift data as a search key. In step S1043, the laminating and fabricating controller 320 acquires irradiation position coordinates included in fabricating data from the three-dimensional fabricating data storage 422. In step S1045, the laminating and fabricating controller 320 corrects the acquired irradiation position coordinates using the found irradiation position correction map.

According to this embodiment, position shifts of light irradiation are acquired based on irradiation light reception by the light position sensors placed on the upper surface of the squeezing blade, and the position shifts are corrected by correcting the irradiation position coordinates. This makes it possible to correct a laser irradiation position in correspondence with the shift of the laser irradiation position during laminating and fabricating by the optical fabricating apparatus. That is, since accurate laser positioning correction can be performed even during laminating and fabricating, positioning in post-processing can easily be performed.

### [Third Embodiment]

Laminating and fabricating by a three-dimensional laminating and fabricating system including a laminating and fabricating control apparatus according to the third embodiment of the present invention will be described next. The laminating and fabricating control apparatus according to this embodiment is different from the second embodiment in that a position shift is detected not based on irradiation light reception by a light position sensors placed on the upper surface of a squeezing blade but by capturing irradiation light and a reference marker (mark) on the upper surface of a squeezing blade. The rest of the components and operations is the same as in the second embodiment. Hence, the same reference numerals denote the same components and operations, and a detailed description thereof will be omitted.

### <<Concept of Fabricating of Laminating and Fabricating Control Apparatus>>

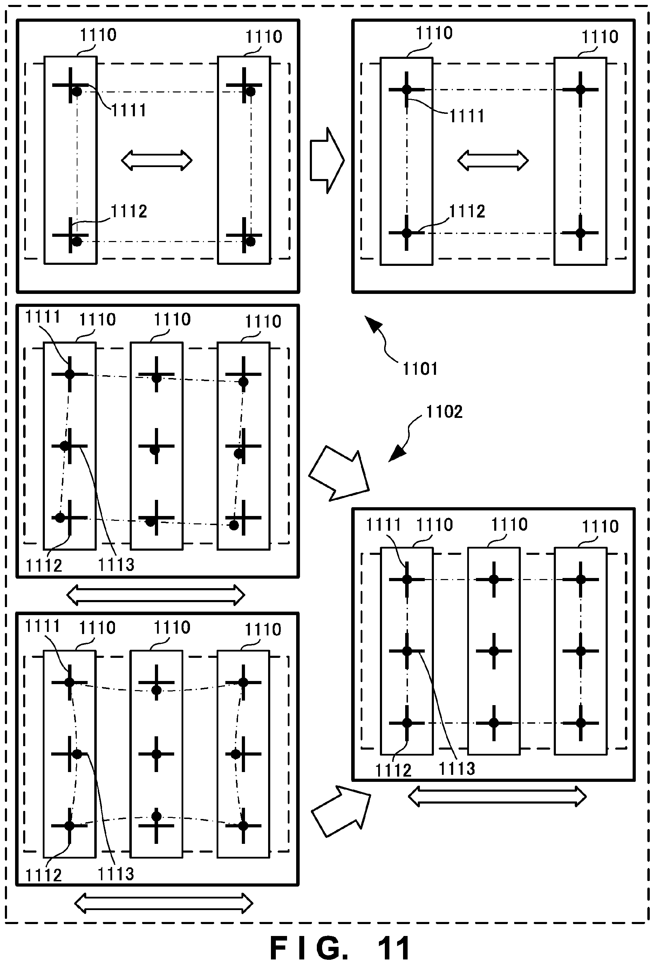

Fig. 11 is a conceptual view showing a fabricating state by the laminating and fabricating control apparatus according to this embodiment. In Fig. 11, reference markers are illustrated large without considering the dimensional relationship of constituent elements to clearly show the fabricating state according to this embodiment. Note that Fig. 11 illustrates position shift detection at four points at minimum and position shift detection at nine points. However, the number of detection points can appropriately be selected in consideration of the correction accuracy, cost, and the like.

The upper row of Fig. 11 shows an example 1101 in which the position shifts of irradiation at the points of the four corners of a laminated and fabricated surface are detected as position shifts from a captured image of two reference markers 1111 and 1112 added to the two ends of a squeezing blade 1110 and irradiation light to irradiate the squeezing blade 1110, and irradiation position correction is performed. The left view of the upper row shows a case in which a position shift to the lower right occurs as a whole. According to this embodiment, irradiation position coordinates are corrected using an irradiation position correction map based on the position shift data of the four points extracted from the captured image of the two reference markers 1111 and 1112 and the irradiation light to irradiate the squeezing blade 1110, and the position shifts are corrected as shown in the right view of the upper row.

The middle and lower rows of Fig. 11 show an example 1102 in which the position shifts of irradiation at nine points of the laminated and fabricated surface are detected as position shifts from a captured image of three reference markers 1111 to 1113 placed at the two ends and the central portion of the squeezing blade 1110 and irradiation light to irradiate the squeezing blade 1110, and irradiation position correction is performed. The left view of the middle row shows a case in which the positions shift such that a clockwise rotation about the upper left corner occurs as a whole. The left view of the lower row shows a case in which the positions shift such that the central portion of each side contracts. According to this embodiment, irradiation position coordinates are corrected using an irradiation position correction map based on the position shift data of the nine points from the captured image of the three reference markers 1111 to 1113 and the irradiation light to irradiate the squeezing blade 1110, and the position shifts are corrected as shown in the right view between the middle and left rows.

Note that the reference marker (mark) is not limited to "+". A shape that enables more accurate position shift detection when captured together with the laser beam is selected. The number of reference markers (marks) added to the squeezing blade 1110 and the number of positions to detect position shifts by irradiating the squeezing blade 1110 are not limited to these examples, and are selected in consideration of the correction accuracy and cost.

### «Functional Arrangement of Laminating and Fabricating Unit»

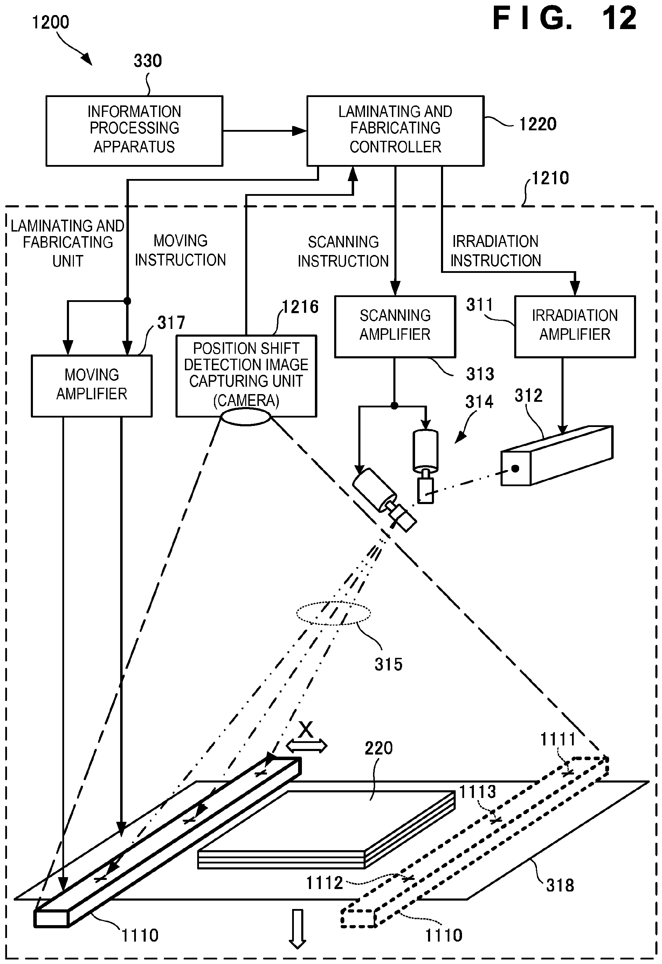

Fig. 12 is a block diagram showing the functional arrangement of a laminating and fabricating unit 1210 in a three-dimensional laminating and fabricating system 1200 including a laminating and fabricating controller 1220 according to this embodiment. Note that the same reference numerals as in Fig. 2 or 3 denote the same constituent elements in Fig. 12, and a repetitive description will be omitted.

The three-dimensional laminating and fabricating system 1200 includes the laminating and fabricating unit 1210, the laminating and fabricating controller 1220, and an information processing apparatus 330. The laminating and fabricating unit 1210 includes the squeezing blade 1110. The reference markers 1111 to 1113 are added to the upper surface of the squeezing blade 1110. The laminating and fabricating unit 1210 includes a position shift detection image capturing unit (camera) 1216 that captures an image including the reference markers 1111 to 1113 and the irradiation position of a laser beam 315 radiated from an irradiator 312. The laminating and fabricating controller 1220 detects an irradiation position shift from the captured image including the reference markers 1111 to 1113 and the irradiation position of the laser beam 315.

In this embodiment, the position shift of an irradiation position of the laser beam 315 radiated from the irradiator 312 can be corrected not only before laminating and fabricating but also during laminating and fabricating. That is, when the squeezing blade 1110 moves on the fabricated surface, the laser beam 315 radiated from the irradiator 312 irradiates x- and y-coordinate positions corresponding to the X-direction coordinate position of the squeezing blade 1110 and the Y-direction coordinate positions of the reference markers 1111 to 1113. At this time, the laminating and fabricating controller 1220 reduces the irradiation intensity (energy), and then sets the x- and y-coordinate positions. The position shift detection image capturing unit 1216 captures the reference markers 1111 to 1113 and irradiation positions actually irradiated with the laser beam 315 that irradiates the x- and y-coordinate positions on the squeezing blade 1110, thereby detecting position shifts. Irradiation position coordinates can be corrected based on the position shift data set, as in the second embodiment.

### «Functional Arrangement of Laminating and Fabricating Controller»

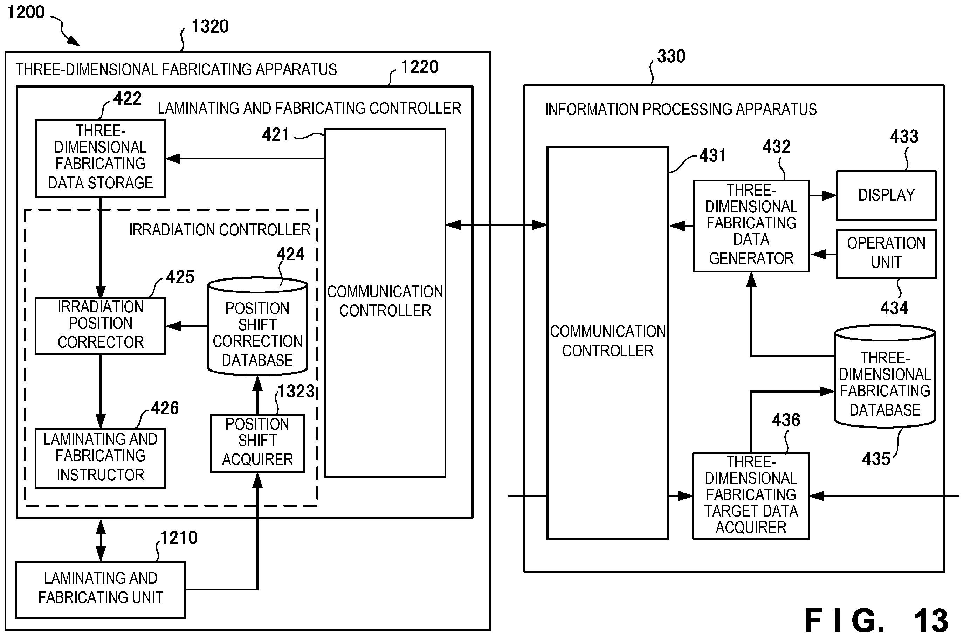

Fig. 13 is a block diagram showing the functional arrangement of the laminating and fabricating controller 1220 in the three-dimensional laminating and fabricating system 1200 according to this embodiment. Fig. 13 shows the functional arrangements of the laminating and fabricating controller 1220 and the information processing apparatus 330 shown in Fig. 12. The laminating and fabricating unit 1210 and the laminating and fabricating controller 1220 may form a three-dimensional fabricating apparatus 1320, that is, a so-called 3D printer. The arrangement of the laminating and fabricating unit 1210 is the same as in Fig. 12, and a repetitive description will be omitted. Note that Fig. 13 illustrates the information processing apparatus 330 and the three-dimensional fabricating apparatus 1320 including the laminating and fabricating controller 1220 as separate apparatuses. However, they may be formed as one apparatus, or the laminating and fabricating controller 1220 may be combined with the information processing apparatus 330. Note that the same reference numerals as in Fig. 4 denote the same constituent elements in Fig. 13, and a repetitive description will be omitted.

The laminating and fabricating controller 1220 includes a communication controller 421, a three-dimensional fabricating data storage 422, a position shift acquirer 1323, a position shift correction database 424, an irradiation position corrector 425, and a laminating and fabricating instructor 426.

The position shift acquirer 1323 acquires position shift data of light at predetermined x- and y-coordinates based on the captured image including the light irradiation positions and the reference markers 1111 to 1113 on the squeezing blade 1110 and received from the position shift detection image capturing unit 1216 of the laminating and fabricating unit 1210. Note that as for the predetermined x- and y-coordinates, in this example, two or three points can be set in the Y direction, and a desired number of points can be set in the X direction. An example in which four points or nine points are set will representatively be described. However, the number of points is not limited in both the X and Y directions.

The position shift acquirer 1323, the position shift correction database 424, the irradiation position corrector 425, and the laminating and fabricating instructor 426 form an entire irradiation controller or a part thereof.

### (Position Shift Acquirer)

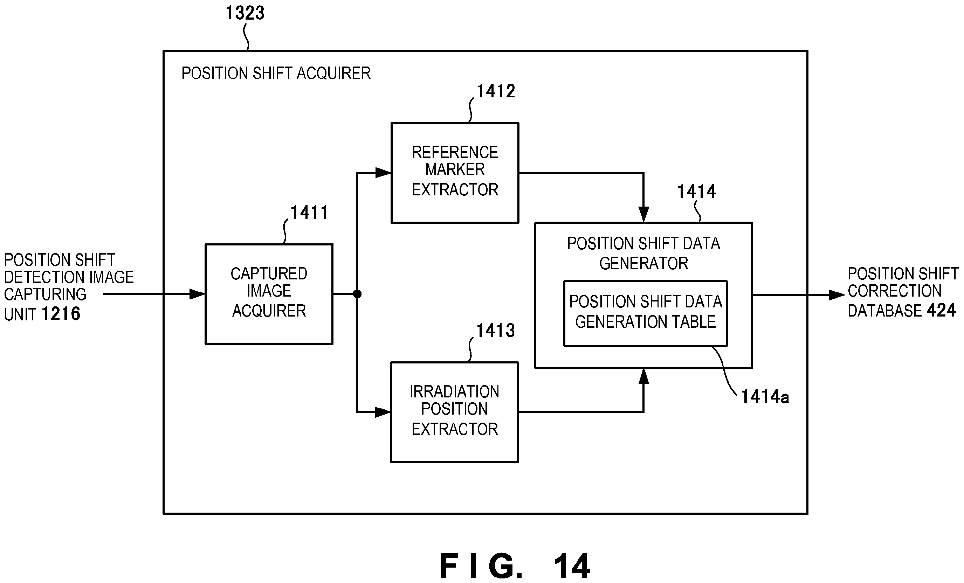

Fig. 14 is a block diagram showing the functional arrangement of the position shift acquirer 1323 according to this embodiment.

The position shift acquirer 1323 includes a captured image acquirer 1411, a reference marker extractor 1412, an irradiation position extractor 1413, and a position shift data generator 1414. The captured image acquirer 1411 acquires a captured image from the position shift detection image capturing unit 1216. The reference marker extractor 1412 extracts the reference markers 1111 to 1113 on the squeezing blade 1110 from the acquired captured image. The irradiation position extractor 1413 extracts the irradiation position of the laser beam on the squeezing blade 1110 from the acquired captured image.

The position shift data generator 1414 includes a position shift data generation table 1414a, and obtains a position shift of each point by comparing the position coordinates of the extracted positions of the reference markers 1111 to 1113 from the reference marker extractor 1412 and the extracted irradiation position of the laser beam from the irradiation position extractor 1413. The position shift data generator 1414 then generates a position shift data set as a search key used to search the position shift correction database 424 for an irradiation position correction map.

### (Position Shift Data Generation Table)

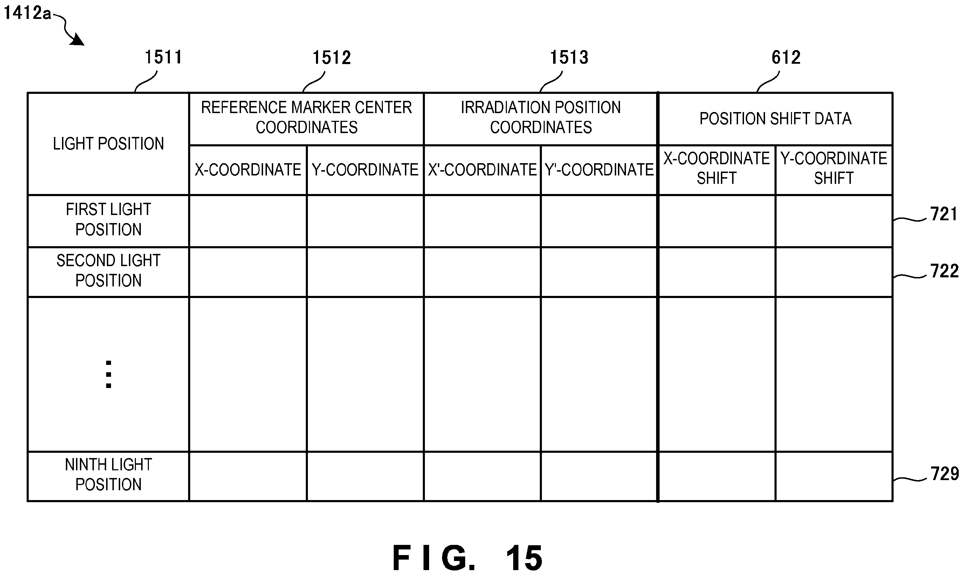

Fig. 15 is a view showing the arrangement of the position shift data generation table 1414a according to this embodiment. The position shift data generation table 1414a is used by the position shift acquirer 1323 to generate a set of position shift data from the position shifts between the light irradiation positions and the positions of the reference markers 1111 to 1113 added to the squeezing blade 1110, which are extracted from the captured image. Note that the same reference numerals as in Fig. 6 or 7 denote the same elements in Fig. 15. Position shifts at nine points will be described with reference to Fig. 15. However, the present invention is not limited to this.

As for the table of the nine points in the position shift data generation table 1414a, coordinates 1512 of a reference marker center (the intersection of +) including an x-coordinate and a y-coordinate and irradiation position coordinates (the center of an irradiation point) 1513 of including an x'-coordinate and a y'-coordinate are stored in association with each of light positions 1511 of the nine points. As the table of the nine points in the position shift data generation table 1414a, a table 612 of position shift data including an x-coordinate shift and a y-coordinate shift associated with each of the light positions 1511 of the nine points is generated and output to the position shift correction database 424 as a search key.

### (Position Shift Data Generation Processing)

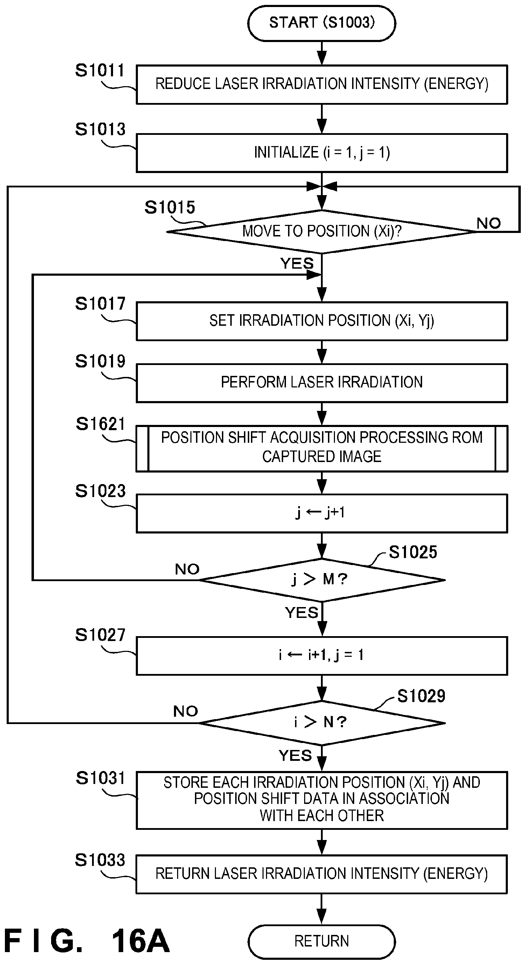

Fig. 16A is a flowchart showing the procedure of position shift data generation processing (step S1003) according to this embodiment. Note that the same step numbers as in Fig. 10B denote the same steps in Fig. 16A, and a repetitive description will be omitted.

In step S1621, the laminating and fabricating controller 1220 executes position shift acquisition processing from a captured image in place of step S1021 of Fig. 10B.

### (Position Shift Acquisition Processing)

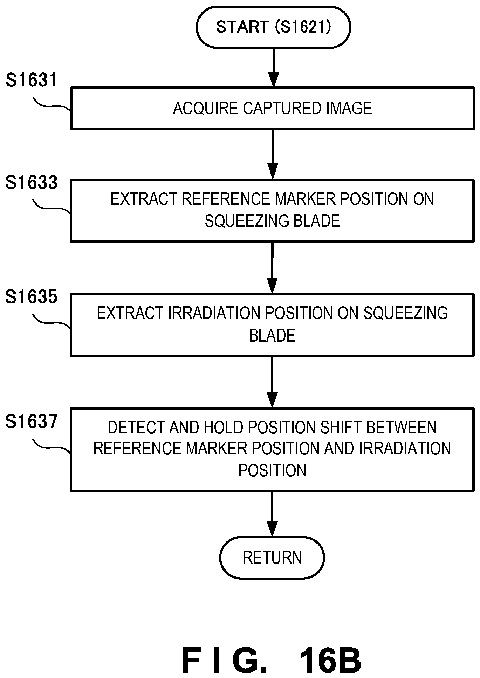

Fig. 16B is a flowchart showing the procedure of position shift acquisition processing (step S1621) according to this embodiment.

In step S1631, the laminating and fabricating controller 1220 acquires a captured image including light irradiation positions and the reference markers 1111 to 1113 on the squeezing blade 1110 from the position shift detection image capturing unit 1216. In step S1633, the laminating and fabricating controller 1220 extracts reference markers on the squeezing blade 1110 and determines coordinate positions. In step S1635, the laminating and fabricating controller 1220 extracts irradiation positions on the squeezing blade 1110 and determines coordinate positions. In step S1637, the laminating and fabricating controller 1220 detects position shifts between the reference marker positions and the irradiation positions and holds the position shifts in association with target position coordinates.

According to this embodiment, position shifts of light irradiation are acquired based on the image including the irradiation positions and the reference markers added to the upper surface of the squeezing blade. This makes it possible to correct a laser irradiation position in correspondence with the shift of the laser irradiation position during laminating and fabricating by the optical fabricating apparatus by simple adjustment without an operation of placing light position sensors on the upper surface of the squeezing blade. That is, when the reference markers are added at the time of manufacture of the squeezing blade, time to adjust the light position sensor placement positions can be saved.

### [Fourth Embodiment]

Laminating and fabricating by a three-dimensional laminating and fabricating system including a laminating and fabricating control apparatus according to the fourth embodiment of the present invention will be described next. The laminating and fabricating control apparatus according to this embodiment is different from the second and third embodiments in that not one irradiator but a plurality of irradiators irradiate a laminating material with irradiation light to fabricate a three-dimensional laminated and fabricated object. The rest of the components and operations is the same as in the second or third embodiment. Hence, the same reference numerals denote the same components and operations, and a detailed description thereof will be omitted. Note that a modification of the second embodiment in which light position sensors are placed on a squeezing blade will be described below. However, application to the third embodiment using reference markers added to a squeezing blade can be implemented in the same way.

### <<Concept of Fabricating of Laminating and Fabricating Control Apparatus>>

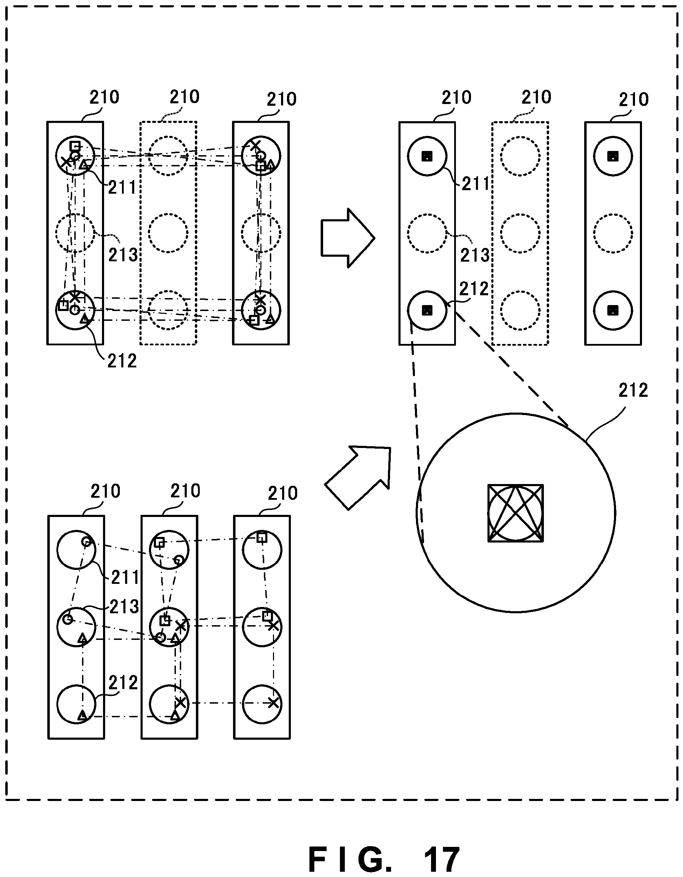

Fig. 17 is a conceptual view showing a fabricating state by the laminating and fabricating control apparatus according to this embodiment. In Fig. 17, light position sensors are illustrated large without considering the dimensional relationship of constituent elements to clearly show the fabricating state according to this embodiment. Note that the same reference numerals as in Fig. 2 denote the same constituent elements in Fig. 17, and a repetitive description will be omitted. Fig. 17 illustrates position shift detection at nine points. However, the number of detection points can appropriately be selected in consideration of the correction accuracy, cost, and the like.

Fig. 17 shows an example in which the position shifts of irradiation at nine points of a laminated and fabricated surface are detected by three light position sensors 211 to 213 placed at the two ends and the central portion of a squeezing blade 210, and irradiation position correction is performed. Note that although Fig. 17 shows only the four points of the four corners, position shifts are actually detected by the light position sensors 211 to 213 at nine points.

The left view of the upper row shows a case in which, for example, four irradiators irradiate the entire surface, and the three light position sensors 211 to 213 detect position shifts. The left view of the lower row shows a case in which, for example, four irradiators irradiate four divided parts, respectively, and the three light position sensors 211 to 213 detect position shifts. Referring to Fig. 17, ○, Δ, □, and × indicate irradiation positions.

According to the example on the left side of the upper row, for each irradiator, irradiation position coordinates are corrected using an irradiation position correction map based on the position shift data of the nine points from the three light position sensors 211 to 213, and the position shifts are corrected as shown in the right view. On the other hand, according to the example on the left side of the lower row, for each irradiator, irradiation position coordinates are corrected using an irradiation position correction map based on the position shift data of the four points in the irradiation ranges out to the three light position sensors 211 to 213, and the position shifts are corrected as shown in the right view.

Note that the number of light position sensors arranged on the squeezing blade 210 and the number of positions to detect position shifts by irradiating the squeezing blade 210 are not limited to these examples, and are selected in consideration of the correction accuracy and cost.

### «Functional Arrangement of Laminating and Fabricating Unit»

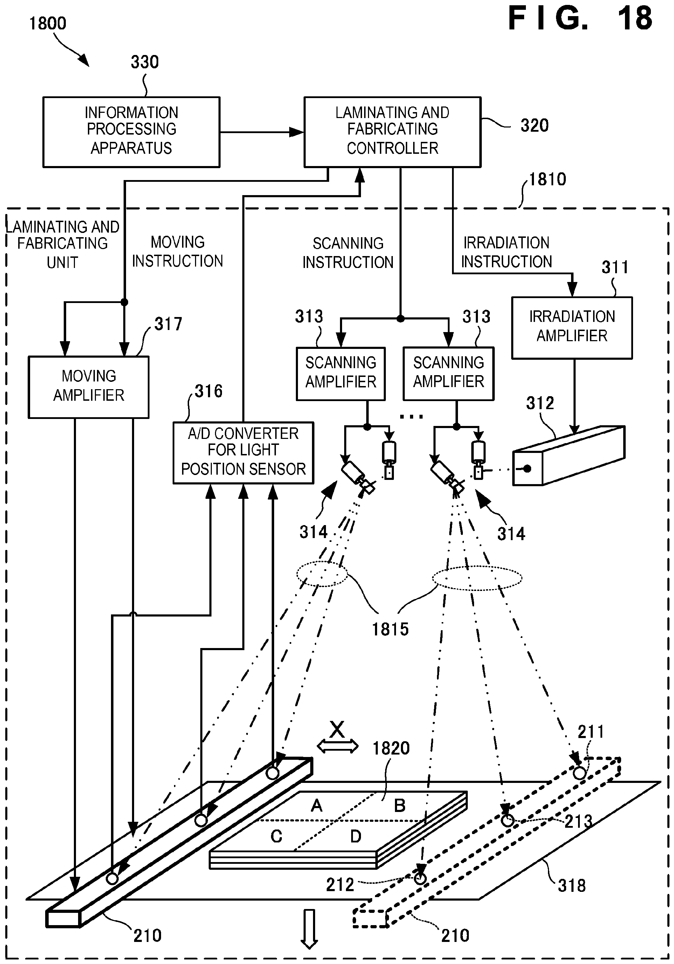

Fig. 18 is a block diagram showing a functional arrangement of a laminating and fabricating unit 1810 in a three-dimensional laminating and fabricating system 1800 including a laminating and fabricating controller 320 according to this embodiment. Note that the same reference numerals as in Fig. 2 or 3 denote the same constituent elements in Fig. 18, and a repetitive description will be omitted.

The laminating and fabricating unit 1810 includes a plurality of scanning amplifiers 313, and a plurality of corresponding sets of biaxial rotary step motors and mirror units 314. Although not illustrated, there are also provided a plurality of irradiation amplifiers 311 and a plurality of irradiators (laser emitters) 312. A fabricated object 1820 is divided into, for example, four partial regions A to D. The partial regions A to D are, in parallel, irradiated with laser beams 1815, thereby shortening the laminating and fabricating time.

According to this embodiment, even for the irradiation positions from the plurality of irradiators, a laser irradiation position can uniformly be corrected in correspondence with the shift of the laser irradiation position during laminating and fabricating by the optical fabricating apparatus. That is, it is also possible to correct the position shifts between the irradiation positions from the plurality of irradiators.

### [Other Embodiments]

Note that the same effects as described above can be obtained by similarly applying the embodiments to a three-dimensional laminating and fabricating system that fabricates each "cell region" representing a region (for example, a 0. 1-mm square rectangle) obtained by dividing the fabricating region of each layer into tiny regions in three-dimensional laminating and fabricating.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when a laminating and fabricating control program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A laminating and fabricating control apparatus for controlling a laminating and fabricating unit that includes a squeezing blade configured to spread a laminating material on an upper layer of a laminated and fabricated object, and an irradiator configured to irradiate the laminating material, to fabricate the laminated and fabricated object, comprising:
a position shift acquirer that acquires a shift of an irradiation position of irradiation light on a surface of said squeezing blade when receiving the irradiation light from said irradiator; and
an irradiation position corrector that corrects the irradiation position by said irradiator based on the shift of the irradiation position.

2. The apparatus according to claim 1, wherein said position shift acquirer includes at least two light position sensors arranged on the surface of said squeezing blade while being spaced apart in an axial direction of said squeezing blade, to acquire the shift of the irradiation position of the irradiation light based on outputs of the at least two light position sensors.

3. The apparatus according to claim 1, wherein said position shift acquirer includes at least two reference markers placed on the surface of said squeezing blade while being spaced apart in an axial direction of said squeezing blade, and an image capturing unit that captures an image including placement positions of the reference markers and the irradiation position of the irradiation light, to acquire the shift of the irradiation position of the irradiation light based on position shifts between the placement positions of the reference markers and irradiation positions of the irradiation light in the captured image.

4. The apparatus according to any one of claims 1 to 3, wherein said position shift acquirer acquires position shifts of at least four irradiation positions at different moving positions of said squeezing blade, and
said irradiation position corrector corrects the irradiation position by said irradiator based on information of the position shifts of the at least four irradiation positions.

5. The apparatus according to any one of claims 1 to 4, wherein said irradiation position corrector includes a storage configured to store correction data of irradiation position coordinates to correct all irradiation positions generated based on information of the position shift of the irradiation position acquired by said position shift acquirer in association with the irradiation position coordinates, to correct the irradiation position by said irradiator with referring to said storage.

6. The apparatus according to any one of claims 1 to 5, wherein the laminating and fabricating control apparatus fabricates the laminated and fabricated object in parallel by a plurality of irradiators,
the position shift acquirer acquires the shift of the irradiation position of the irradiation light on the surface of said squeezing blade by each of said plurality of irradiators, and
the irradiation position corrector corrects the irradiation position by each of said plurality of irradiators based on the shift of the irradiation position.

7. The apparatus according to any one of claims 1 to 6, further comprising a switcher that performs switching to reduce an irradiation intensity of said irradiator when the surface of said squeezing blade is irradiated to acquire the shift of the irradiation position of the irradiation light.

8. A method of controlling a laminating and fabricating apparatus that includes a squeezing blade configured to spread a laminating material on an upper layer of a laminated and fabricated object, and an irradiator configured to irradiate the laminating material, to fabricate the laminated and fabricated object, comprising:
acquiring a shift of an irradiation position of irradiation light on a surface of the squeezing blade when receiving the irradiation light from the irradiator; and
correcting the irradiation position by the irradiator based on the shift of the irradiation position.

9. A control program for controlling a laminating and fabricating apparatus that includes a squeezing blade configured to spread a laminating material on an upper layer of a laminated and fabricated object, and an irradiator configured to irradiate the laminating material, to fabricate the laminated and fabricated object, which causes a computer to execute a method, comprising:
acquiring a shift of an irradiation position of irradiation light on a surface of the squeezing blade when receiving the irradiation light from the irradiator; and
correcting the irradiation position by the irradiator based on the shift of the irradiation position.

10. A three-dimensional laminating and fabricating system comprising:
a laminating and fabricating unit that includes a squeezing blade configured to spread a laminating material on an upper layer of a laminated and fabricated object, and an irradiator configured to irradiate the laminating material, to fabricate the laminated and fabricated object;
a position shift acquirer that acquires a shift of an irradiation position of irradiation light on a surface of said squeezing blade when receiving the irradiation light from said irradiator; and
an irradiation position corrector that corrects the irradiation position by said irradiator based on the shift of the irradiation position.
